# EUROPEAN PATENT SPECIFICATION

(11) **EP 1 932 748 B1**
(45) Date of publication and mention of the grant of the patent: **24.06.2009**
(21) Application number: 07118242.2
(22) Date of filing: 10.10.2007
(51) Int. Cl.: B62D 25/04, B60J 10/00, B60J 10/06

(54) **Front Pillar For Frameless Door In Automobile**
Vordersäule für eine rahmenlose Automobiltür
Pilier antérieur pour porte sans cadre dans une automobile

(30) Priority: 14.12.2006 KR 20060127813
(43) Date of publication of application: 18.06.2008
(73) Proprietor: HYUNDAI MOTOR COMPANY, Seoul (KR)
(72) Inventor: Lee, Jae Hyuck, Gyeonggi-do (KR)
(74) Representative: Viering, Jentschura & Partner

(56) References cited:
- EP-A- 1 279 542
- EP-A- 1 325 827
- WO-A-20/05102781
- DE-A1-6102004 019 00
- US-A- 5 806 914

## Description

### BACKGROUND OF THE INVENTION

### (a) Field of the Invention

The present invention relates to a front pillar for a frameless door in an automobile. More particularly, the present invention relates to a front pillar for a frameless door in an automobile that does not need to configure a molding so that aesthetical features are improved, and in which a bracket is disposed between an outer panel and an inner panel of a front pillar so that waterproofing and sound insulation characteristics are improved and manufacturing and assembly processes are simplified.

### (b) Description of the Related Art

Generally, some vehicles, such as sports vehicles, consist of a frameless door for improving aesthetical features that is configured without a frame supporting an upper surface of a door glass.

Since the door does not have a frame supporting an upper surface of the door glass, the door glass is sealed by weather-strips configured on an upper part of a vehicle when the door glass is closed.

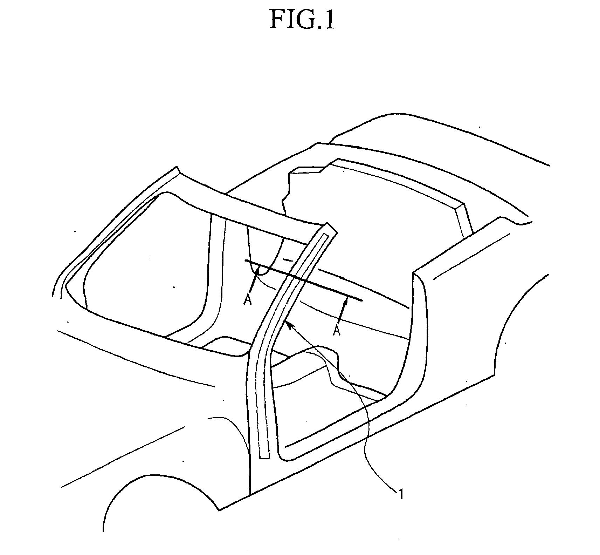

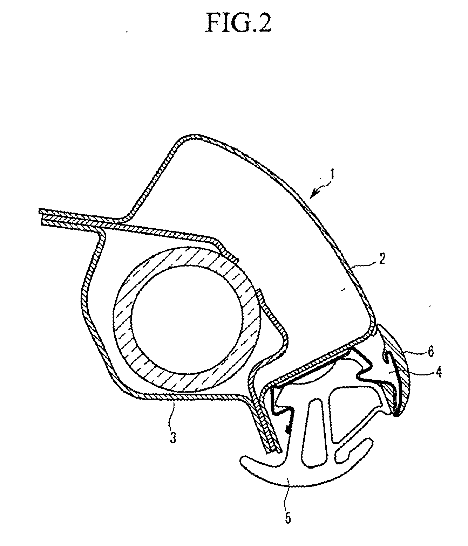

FIG. 1 shows a general vehicle body, and FIG. 2 is a cross-sectional view showing a front pillar taken along line A-A of the general vehicle body in FIG. 1.

As shown in FIG. 2, a front pillar for a frameless door in a general automobile includes an outer panel 2 and an inner panel 3, and a bracket 4 wherein a door glass (not shown) is inserted when the door glass is closed.

The bracket 4 is disposed between the outer panel 2 and a molding 6 configured on the outer panel 2.

Also, the front pillar for a frameless door in a general automobile further includes a weather strip 5 that is hollow, and one end of the weather strip is inserted into the bracket 4 and the door glass is inserted into the other end of the weather strip 5.

The weather strip 5 shrinks and closely contacts the door glass when the door glass is closed and presses the weather strip 5.

However, in the front pillar for a frameless door in a general automobile the molding 6 is configured, the bracket 4 is disposed thereon, and then the weather strip 5 is disposed on the bracket 4. Therefore, the molding 6 is exposed to the outside so that aesthetical features are deteriorated. Further, in the front pillar for a frameless door in a general automobile, processes for waterproofing and sound insulation, as well as processes for assembling the molding 6 and the bracket 4, are required.

The above information disclosed in this Background section is only for enhancement of understanding of the background of the invention and therefore it may contain information that does not form the prior art that is already known in this country to a person of ordinary skill in the art. Document EP 1325827 A1 discloses a front pillar according to the preamble of claim 1.

### SUMMARY OF THE INVENTION

The object of the present invention is to provide a front pillar for a frameless door in an automobile where there is no need to configure a molding in order to improve the aesthetical features, and where a bracket is disposed between an outer panel and an inner panel of the front pillar so that waterproofing and sound insulation characteristics are improved and manufacturing and assembly processes are simplified.

The above objects are achieved by the special features of claim 1.

### BRIEF DESCRIPTION OF THE DRAWINGS

FIG. 1 is a schematic view showing a general vehicle body.
FIG. 2 is a cross-sectional view along a line A-A of FIG. 1.
FIG. 3 is a cross-sectional view showing a front pillar for a frameless door in an automobile according to an exemplary embodiment of the present invention.

### <Description of Reference Numerals Indicating Primary Elements in the Drawings>

| | |
|---|---|
| 20: outer panel | 30: inner panel |
| 40: bracket | 41: first flat panel |
| 42: second flat panel | 43: third flat panel |
| 50: weather strip | 51: the first weather strip portion |
| 52: second weather strip portion | |

### DETAILED DESCRIPTION OF THE EMBODIMENTS

The present invention will now be described more fully hereinafter with reference to the accompanying drawings.

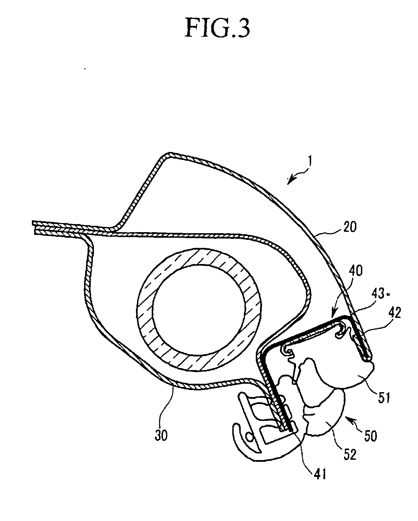

FIG. 3 is a cross-sectional view showing a front pillar for a frameless door in an automobile according to an exemplary embodiment of the present invention.

As shown in FIG. 3, a front pillar for a frameless door in an automobile according to an exemplary embodiment of the present invention includes an outer panel 20 and an inner panel 30 of a front pillar 1 of a vehicle. Also, the front pillar 1 according to an exemplary embodiment of the present invention further includes a bracket 40 wherein a door glass (not shown) is inserted when the door glass is closed, and that is disposed between the outer panel 20 and the inner panel 30. The outer panel 20 is extended to an end of the bracket 40.

As described above, the front pillar according to an exemplary embodiment of the present invention does not need to configure a molding on the outer panel 20 so that aesthetical features are improved, and the bracket 40 is disposed between the outer panel 20 and the inner panel 30 so that waterproofing and sound insulation characteristics are improved, and manufacturing and assembly processes are simplified, unlike with a general front pillar. 50 closely contacts the door glass when the door glass is closed.

Preferably, the weather strip 50 includes a first weather strip portion 51 and a second weather strip portion 52, wherein one end of the first weather strip portion 51 is inserted into the bracket 40 and the other end of the first weather strip portion 51 is supported by the outer panel 20, and the second weather strip portion 52 is connected to a connecting portion of the bracket 40 and the inner panel 30.

As described above, the weather strip 50 includes the first weather strip portion 51 and the second weather strip portion 52 so that waterproofing and sound insulation characteristics are improved.

An end of the outer panel 20 is bent for connecting with the bracket 40, and an end of the bracket 40 and the bent portion of the outer panel 20 are joined with a hemming process so that the end of the bracket 40 is inserted into the bent portion of the outer panel 20.

The bracket 40 includes a first flat panel 41, which is connected with the inner panel 30, a second flat panel 42, which is connected with outer panel 20, and a third flat panel 43, which connects the first flat panel 41 and the second flat panel 42. The bracket 40 forms a 'U' shape so that sealing characteristics are improved.

The front pillar for a frameless door in an automobile according to an exemplary embodiment of the present invention has the advantages that there is no need to configure a molding so that aesthetical features are improved, and that a bracket is disposed between an outer panel and an inner panel of the front pillar so that waterproofing and sound insulation characteristics are improved, and manufacturing and assembly processes are simplified.

While this invention has been described in connection with what is presently considered to be practical exemplary embodiments, it is to be understood that the invention is not limited to the disclosed embodiments, but, on the contrary, is intended to cover various modifications and equivalent arrangements included within scope of the appended claims.

## Claims

1. A front pillar (1) for a frameless door in an automobile comprising:
an outer panel (20);
an inner panel (30); and
a bracket (40) into which a door glass is inserted when the door glass is closed, and the bracket (40) is disposed between the outer panel (20) and the inner panel (30),
wherein,
the outer panel (20) is extended to an end of the bracket (40), **characterized in that**
an end of the outer panel (20) is bent for connecting with the bracket (40),
and an end of the bracket (40) is inserted into the bent portion of the outer panel (20).

2. The front pillar of claim 1, wherein
the front pillar further comprises a weather strip (50) that is inserted into the bracket (40), and the weather strip (50) closely contacts the door glass when the door glass is closed.

3. The front pillar of claim 2, wherein
the weather strip (50) comprises:
a first weather strip portion (51), of which one end is inserted into the bracket (40) and the other end is supported by the outer panel (20); and
a second weather strip portion (52) which is connected to a connecting portion of the bracket and the inner panel (30).

4. The front pillar of claim 3, wherein
the bracket (40) comprises:
a first flat panel (41), which is connected with the inner panel (30);
a second flat panel (42) which is connected with the outer panel (20); and
a third flat panel (43), which connects the first flat panel (41) and the second flat panel (42).

## Patentansprüche

1. Frontsäule (1) für eine rahmenlose Tür in einem Kraftfahrzeug, aufweisend:
ein äußeres Paneel (20),
ein inneres Paneel (30), und
eine Halterung (40), in die ein Türglas eingesetzt ist, wenn das Türglas geschlossen ist, und wobei die Halterung (40) zwischen dem äußeren Paneel (20) und dem inneren Paneel (30) angeordnet ist,
wobei
sich das äußere Paneel (20) zu einem Ende der Halterung (40) erstreckt, **dadurch gekennzeichnet, dass**:
ein Ende des äußeren Paneels (20) zum Verbinden mit der Halterung (40) gekrümmt ist,
und dass ein Ende der Halterung (40) in den gekrümmten Abschnitt des äußeren Paneels (20) eingesetzt ist.

2. Frontsäule gemäß Anspruch 1, wobei
die Frontsäule ferner einen Dichtungsstreifen (50) aufweist, der in die Halterung (40) eingesetzt ist, und der Dichtungsstreifen (50) in engem Kontakt mit dem Türglas ist, wenn das Türglas geschlossen ist.

3. Frontsäule gemäß Anspruch 2, wobei
der Dichtungsstreifen (50) aufweist:
einen ersten Dichtungsstreifenabschnitt (51), wobei ein Ende desselben in die Halterung (40) eingesetzt ist und das andere Ende von dem äußeren Paneel (20) gehalten wird, und
einen zweiten Dichtungsstreifenabschnitt (52), der mit einem Verbindungsabschnitt der Halterung und des inneren Paneels (30) verbunden ist.

4. Frontsäule gemäß Anspruch 3, wobei
die Halterung (40) aufweist:
ein erstes flaches Paneel (41), das mit dem inneren Paneel (30) verbunden ist,
ein zweites flaches Paneel (42), das mit dem äußeren Paneel (20) verbunden ist, und
ein drittes flaches Paneel (43), welches das erste flache Paneel (41) und das zweite flache Paneel (42) verbindet.

## Revendications

1. Pilier avant (1) pour une porte sans arceau dans une automobile, comprenant :
un panneau externe (20) ;
un panneau interne (30) ; et
un support (40) dans lequel une vitre de porte est insérée lorsque la vitre de porte est fermée, et le support (40) est disposé entre le panneau externe (20) et le panneau interne (30),
dans lequel le panneau externe (20) est étendu sur une extrémité du support (40), **caractérisé en ce que** :
une extrémité du panneau externe (20) est courbée pour le raccordement avec le support (40),
et une extrémité du support (40) est insérée dans la partie courbée du panneau externe (20).

2. Pilier avant selon la revendication 1, dans lequel :
le pilier avant comprend en outre un caoutchouc d'étanchéité (50) qui est inséré dans le support (40) ; et le caoutchouc d'étanchéité (50) est en contact étroit avec la vitre de porte lorsque la vitre de porte est fermée.

3. Pilier avant selon la revendication 2, dans lequel :
le caoutchouc d'étanchéité (50) comprend :
une première partie de caoutchouc d'étanchéité (51) dont une extrémité est insérée dans le support (40) et dont l'autre extrémité est supportée par le panneau externe (20) ; et
une seconde partie de caoutchouc d'étanchéité (52) qui est raccordée à une partie de raccordement du support et au panneau interne (30).

4. Pilier avant selon la revendication 3, dans lequel :
le support (40) comprend :
un premier panneau plat (41) qui est raccordé avec le panneau interne (30) ;
un deuxième panneau plat (42) qui est raccordé avec le panneau externe (20) ; et
un troisième panneau plat (43) qui raccorde le premier panneau plat (41) et le second panneau plat (42).
